# EUROPÄISCHE PATENTSCHRIFT

(11) **EP 2 404 365 B1**
(45) Veröffentlichungstag und Bekanntmachung des Hinweises auf die Patenterteilung: **23.07.2014**
(21) Anmeldenummer: 10711136.1
(22) Anmeldetag: 05.03.2010
(51) Int. Cl.: H02K 1/20, H02K 5/20, H02K 15/12, H02K 1/18, H02K 16/02

(54) **DOPPELROTORMOTOR**
DUAL-ROTOR MOTOR
MOTEUR À ROTOR DOUBLE

(30) Priorität: 05.03.2009 DE 102009011383
(43) Veröffentlichungstag der Anmeldung: 11.01.2012
(73) Patentinhaber: CPM Compact Power Motors GMBH, 85774 Unterföhring (DE)
(72) Erfinder: LEIBER, Heinz, 71739 Oberriexingen (DE); LEIBER, Thomas, 81675 München (DE); UNTERFRAUNER, Valentin, 80935 München (DE)
(74) Vertreter: Lenzing Gerber Stute
(86) Internationale Anmeldenummer: PCT/EP2010/001383
(87) Internationale Veröffentlichungsnummer: WO 2010/099975

(56) Entgegenhaltungen:
- EP-A2- 1 164 688
- EP-A2- 1 480 316
- JP-A- 2005 269 730

## Beschreibung

Die vorliegende Erfindung betrifft einen Doppelrotormotor nach dem Oberbegriff des Anspruchs 1.

### Stand der Technik

Doppelrotormotoren mit Einzelzahntechnik und hohem Wirkungsgrad, jedoch geringer Festigkeit und schlechter Wärmeabfuhr sind aus WO 06/083097, US 6002192, WO04/004098 und US 5982070 bekannt. Diese Motoren zeichnen sich durch eine hohe Effizienz des Magnetkreises aus, da mit der Einprägung eines Stromes im Statorzahn ein Drehmoment über zwei Rotoren generiert wird. Besonders vorteilhaft sind Einzelzähne im Erregerkreis, wie in o.g. Anmeldungen ausgeführt.

Doppelrotoren können für große Leistungen und Drehmomente ausgelegt werden. Dafür müssen die Erregerzähne, Spulen und Befestigungen eine hohe Steifigkeit aufweisen. Für große Drehmomente und kompakte Bauweise müssen hierzu die Erregerzähne mit Spulen dicht aneinander gebaut werden. Da bei einem Doppelrotormotor mit Einzelzähnen der Stator freitragend ist, müssen die Zähne und Spulen mit einer hohen Steifigkeit am Gehäuse abgestützt werden. Außerdem ist die Änderung des magnetischen Flusses in Doppelrotormotoren sehr hoch, so dass elektrisch leitfähige Materialien im Magnetkreis unerwünscht sind, da in diesen sehr hohe Wirbelströme erzeugt werden. Daher sind elektrisch leitfähige Materialien mit großem Querschnitt insbesondere im Bereich der größten Flussänderungen, wie sie in den Polen und den Luftspalten auftreten, zu vermeiden.

Die WO2006/083097 zeigt einen derartigen Doppelrotormotor. Hier sind die freitragenden Spulen mit Spulenkörper und Joch zu einem Stator verspritzt. Die Anmeldung zeigt keinen Querschnitt durch die Spulen, um den Abstand zum benachbarten Joch zu erkennen. Es kann daher angenommen werden, dass die gezeigte Wandstärke auch in Umfangsrichtung gilt und damit zur benachbarten Spule ein großer Abstand vorliegt. Die Drehmomentabstützung erfolgt im wesentlichen über den umspritzten Körper und die Verrippung an der Gehäuseseite. Da primär im Außenbereich sehr hohe Momente wirken, kann der Stator nur begrenzt Drehmoment abstützen.

Die WO 2004/004098 zeigt ebenfalls einen Doppelrotormotor, bei dem die Joche mit den Spulenkörper umspritzt sind. Die Spulenkörper werden mit den bewickelten Spulen in einem Gehäuse über Positonierungsstege eines Kunststoffkörpers (Fig. 13A) zentriert und anschließend mit dem Kunststoffkörper und dem Gehäuse mit Gießharz vergossen. Da die Positionierungsstege nur eine geringe Breite ausweisen, ist ihr Flächenträgheitsmoment Ia sehr gering, so dass die Positionierungsstege nur geringe Kräfte übertragen können. Das Gießharz weist bekannter weise ein geringes E-Modul auf, so dass auch über den Verguss keine hohen Momente übertragen werden können. Der Zahn stützt sich primär auf dem Spulenkörper ab, der wiederum über die Vergussmasse mit dem Gehäuse und Träger verbunden ist. Die Konstruktion ist somit nur beschränkt belastbar und lässt sich nur für Motoren mit geringer Drehmomentbelastung einsetzen.

Ferner ist die Wärmeabfuhr bei den Motoren gemäß Stand der Technik sehr begrenzt, da der Stator ungünstig mit dem Gehäuse verbunden ist. Der Stator ist, wie in Fig. 9C (WO 2006/083097) dargestellt, mit dem Gehäuse über Kunststoff über eine große Weglänge mit dem radial nach innen versetzten Gehäuse verbunden. Dadurch ist die Leistung des Motors sehr begrenzt, da die Wärme aus den Spulen nicht abgeführt werden kann. Da zudem die Wärmeleitfähigkeit von Gießharz oder Spritzkunststoff sehr gering ist, wirkt ein großer Abstand zwischen Spule und Metallgehäuse thermisch isolierend. Ähnliches gilt für WO2006/083097.

Doppelrotormotoren mit hoher Steifigkeit und Leistungsfähigkeit sind aus EP 1879283 (Matsushita), EP 1191673 (Denso) und US 5260642 (Huss) vorbekannt. Aus der EP 1879283 und der EP 1191673 ist jeweils ein Statoraufbau vorbekannt, bei der zwei mit Permanentmagneten besetzte Rotoren über eine Welle miteinander verbunden sind. Die Rotoren werden dabei über einen mit Erregerspulen bewickelten Stator angetrieben. Der Stator ist einteilig ausgeführt und besteht aus inneren und äußeren Zähnen mit Polschuhen und einem tangentialen Verbindungssteg zwischen den Jochschenkeln. Auf jeden Verbindungssteg ist jeweils eine Erregerspule in Umfangsrichtung gewickelt, wie es mit Fig. 8 der EP 1879283 und mit Fig. 38 der EP 1191673 dargestellt ist. Durch diese Spulenanordnung wird der magnetische Fluss im Verbindungssteg tangential erzeugt. Der magnetische Fluss teilt sich dabei in den Jochzähnen in zwei magnetische Teilflüsse auf. Einer der Teilflüsse geht radial nach außen zum Außenrotor und schließt sich über den Außenrotor und über den benachbarten Statorzahn radial nach innen zum Verbindungssteg. Der zweite Teilfluss führt radial nach innen und schließt sich über den Innenrotor, und wird radial nach außen über den benachbarten Statorzahn geführt und schließt sich über den Verbindungssteg.

In EP 1191673 sind abweichend zum Statoraufbau der EP 1879283 die Rotoren nicht über eine Welle miteinander verbunden. Stattdessen wird die relative Rotorposition des äußeren und inneren Rotors über einen Kontrollalgorithmus gesteuert.

Aus der US 5260642 ist ein weiterer Doppelrotor bekannt. Dort sind mehrere mit Permanentmagneten bestückte Rotoren axial zueinander angeordnet und werden über einen außen liegenden Erregerstator angetrieben.

Die aus der EP 1191673 und EP 1879283 bekannte Wickeltechnik ist nachteilig. Die tangentiale Wickeltechnik ist zum einen sehr aufwändig, zum anderen kann bei automatisierter Wickelung kein guter Kupferfüllfaktor erzielt werden, da der durch die Polschuhe abdeckte Raum beim Bewickeln schlecht gefüllt werden kann. Zudem wird der magnetische Fluss vom Verbindungssteg in tangentialer Richtung erzeugt und dann um 90° in radiale Richtung umgelenkt. Dies ist für die Effizienz der Magnetkreise ungünstig und schließt den Einsatz von weichmagnetischem Material mit Kornorientierung aus.

Aus EP 1 480 316 ist ein Motor vorbekannt, bei dem Träger zwischen den Statorzähnen angeordnet sind, und die mittels die Träger durchgreifenden Schrauben am Gehäuase befestigt sind.

Die JP 2005 269730 zeigt ebenfalls einen Motor, bei dem zwischen den die Erregerspulen tragenden Statorzähnen Trägerelemente angeordnet sind.

Aus der EP 1 164 688 ist ein Motor vorbekannt, der einen Statorträger aus Aluminium aufweist, welcher am Gehäuse befestigt ist, wobei der Träger axial verlaufende Trägerelemente mit Kühlkanälen aufweist.

### Aufgabe und Ausführung der Erfindung

Aufgabe der Erfindung ist es, ein Doppelrotormotor für hohe Drehmomente und Leistung bereitzustellen.

Diese Aufgabe wird vorteilhaft mit einem Doppelrotormotor mit den Merkmalen des Anspruchs 1 und ein Verfahren zu seiner Herstellung mit den Merkmalen des Anspruchs 24 gelöst. Vorteilhafte Ausgestaltungen des Doppelrotors nach Anspruch 1 und des Verfahrens nach Anspruch 24 ergeben sich durch die Merkmale der Unteransprüche.

Der Erfindung liegt der Gedanke zugrunde, dass die Spulenträger, welche zudem die Pole und das Joch bilden, mittels eines Kunststoffs umspritzt werden, wobei der Kunststoff eine Trägerstruktur bildet, die sich ebenfalls zwischen den einzelnen Spulenträgern und Spulen ausbildet. Der Kunststoff verbindet sich beim Umspritzen mit dem Gehäuse oder mit einem mit dem Gehäuse verbundenen Teil, so dass eine stabile Einheit entsteht. Der Kunststoff ist vorzugsweise ein hochfester Kunststoff. Die zwischen den Spulenträgern eingespritzte Kunststoffmasse bildet jeweils Träger, welche vorteilhaft im Querschnitt U-förmig, T-förmig oder Doppel-T-förmig ausgebildet sind.

Die Auslegung des Doppelrotormotors für hohe Drehmomente, Leistung und kompakte Bauweise erfordert spezielle Lösungen für Steifigkeit und Wärmeabfuhr, da allein das Umspritzen/Vergießen von Spulenträger und Joch hierfür nicht ausreicht. Für eine hohe Steifigkeit ist ein großes Flächenträgheitsmoment Ia für eine geringe Verbiegung des Stators und ein hohes E-Modul erforderlich. Im Stand der Technik wurde als Träger der Spulenkörper eingesetzt, welcher über die Vergussmasse mit dem Gehäuse verbunden ist, bzw. eine Umspritzung der Statorzähne, welche die Steifigkeit gibt.

Im Gegensatz hierzu sieht die Erfindung vor, den fertigungsbedingten Raum bzw. Abstand zwischen den Spulen zu nutzen, welcher von dem eingespritzten Kunststoff ausgefüllt wird und eine Trägerstruktur bzw. einen Träger bildet. Hierdurch wird ein Flächenträgheitsmoment Ia erzielt, welches im Vergleich zum Spulenkörper mehr als um den Faktor vier größer ist. Es kann auch das gesamte Joch bzw. der Außenpol mit einer relativ dünnen Wand aus Kunststoff umspritzt werden. Im Gegensatz zum Stand der Technik wird die Verstärkung mit einem hochwertigen Kunststoff abgestützt. Es kann jedoch auch zusätzlich ein Füllstoff mit hohem E-Modul eingespritzt werden. Vorzugsweise wird ein Duroplast verwendet, in dem ein gut wärmeleitender Füllstoff, z.B. Bor-Nitrid, eingebettet wird. Die Umspritzung wird mit dem Gehäuse mit entsprechenden Profilen und Verankerungen verbunden. Durch das Verwenden von Kunststoff werden vorteilhaft die Wirbelstromverluste zur Erzielung eines guten Wirkungsgrades minimiert.

Zur weiteren Verstärkung können Teile, die insbesondere dünnwandig ausgebildet sind, mit hohem E-Modul in die Verspritzung eingebettet bzw. eingebaut werden.

Vorteilhaft ist zudem ein Statorzahn mit einer körperlosen Spule oder mit Isolationsteilen nur an der Zahnhalswandung und Stirnseite mit entsprechendem Abstand zum Außen- und Innenpol. In diesem durch den Abstand gebildeten Raum wird dann das Material einspritzt.

Durch den zuvor beschriebenen Umspritzungsvorgang sind alle Einzeljoche mit ihren Spulen mit dem Gehäuse verbunden und entsprechend zentriert. Der Freiraum bzw. der Abstand zwischen den Spulen und Jochen ist dann ebenso wie die Stirnseite der Spule mit Kunststoff umhüllt bzw. ausgefüllt, wobei eine entsprechende Struktur und Kontur des Kunststoffes zur Außenverstärkung ausgebildet sein kann.

In einer besonders vorteilhaften Ausgestaltung der Erfindung bildet der Freiraum bzw. Abstand zwischen den Einzeljochen und den Spulen einen Doppel-T-Träger-förmigen Raum, der vom Kunststoff ausgefüllt wird. Der Kunststoff bildet nach dem Spritzen somit einen im Querschnitt Doppel-T-Träger-förmigen Träger, welcher im Gehäuse oder dem mit dem Gehäuse verbundenen Teil verankert ist. Durch diese Querschnittskontur wird somit eine besonders gute Steifigkeit erzielt. Die Querschnittskontur der Träger kann sich dabei vorteilhaft in die entsprechend ausgebildeten Ausnehmungen des Gehäuses bzw. dessen damit verbundenen Teils erstrecken, so dass sich eine besonders gute Steifigkeit der Träger ergibt. Die Ausnehmungen können dabei von ihrer Querschnittsfläche noch größer ausgebildet sein als die Trägerquerschnittsfläche im Bereich des Rotors, so dass sich eine Art verbreiteter Sockel am Träger ergibt, der sich in die Ausnehmungen des Gehäuses bzw. Gehäuseteils erstreckt.

Ebenso können zur Verstärkung der Kunststoffmasse Verstärkungselemente vorgesehen werden, die mit ihrem einen Ende jeweils bis in eine Ausnehmung hineinreichen und sich mit ihrem anderen Ende bis zum Statorzahn oder bis in den Zwischenraum zwischen den benachbarten Statorzähnen erstrecken. Die Verstärkungselemente können dabei im Bereich der äußeren Polschuhe und/oder der inneren Polschuhe eingebettet sein.

Es ist optional möglich, durch zusätzliches Umspritzen der Pole mit dem Kunststoff eine noch steifere Konstruktion zu erlangen. Der die Pole bzw. Polschuhe ummantelnde Kunststoff ist dabei mit den Trägern durch sich radial und axial erstreckende Wandungen verbunden. Durch das Ummanteln der Polschuhe wird zwar die Länge des Luftspaltes vergrößert, was jedoch durch die erhöhte Steifigkeit und damit das größere Leistungsvermögen des Motors wieder ausgeglichen wird.

In der erfindungsgemäßen Ausführung werden einzelne Statorzähne, die im Querschnitt vorteilhaft eine Doppel-T-Form haben können, d.h. radial außen und innen Polschuhe aufweisen, zuerst axial bewickelt und dann in dem Spritzwerkzeug positioniert. Der Stator weist im Gegensatz zu Doppelrotoren mit hoher Leistung und Steifigkeit (Stand der Technik (EP 1879283 (Matsushita), EP 1191673 (Denso) und US 5260642 (Huss) ) keine tangentialen Verbindungsstege auf. Der magnetische Fluss wird in dieser Ausführung radial erzeugt und schließt sich über den Außenrotor, die benachbarten Statorzähne und den Innenrotor.

Die Einzelzähne sind über die aus Kunststoff gespritzten Träger bzw. Trägerelemente mit dem Gehäuse fest verankert und in Position gehalten.

Die gespritzten Trägerelemente sind vorzugsweise T-förmig oder besonders bevorzugt Doppel-T-Träger-förmig ausgeführt, so dass der Stator eine sehr hohe Steifigkeit für radiale und tangentiale Belastungen erreicht. Vorzugsweise ist der Kunststoff zur Gewährleistung einer sehr effizienten Wärmeabfuhr aus Materialien mit hoher Wärmleitfähigkeit, aber geringer elektrischen Leitfähigkeit ausgeführt.

Der erfindungsgemäße Aufbau weist folgende Vorteile im Vergleich zum Stand der Technik auf:
■ höherer Wirkungsgrad des Motors durch radiale Flusserzeugung im Erregerjoch;
■ sehr hohe Leistungsdichte durch Doppelrotor;
■ einfache und kostengünstige Wickeltechnik durch Einzelzahnwickeltechnik;
■ kostengünstiger Motoraufbau;
■ sehr hoher Kupferfüllfaktor durch Einzelzahnwickelung, Einsatz von Rechteckdraht oder Profildraht möglich;
■ Einsatz von kornorientiertem Material bzw. Blechmaterial mit Vorzugsrichtung in Einzelzähnen möglich durch radiale Flusserzeugung im Stator;
■ sehr gute Wärmeabfuhr möglich, dadurch dass die Spule in einem gut wärmeleitenden Träger liegt und die Polschuhe der Statorzähne mit dem Gehäuse in Kontakt sind.
■ Spulen vor Einbau prüfbar;
■ gute radiale und tangentiale Steifigkeit;
■ einfache elektrische Kontaktierung der Spule auf Gehäuserückseite bzw. in Aussparungen des Gehäuses;
■ Möglichkeit zur Gestaltung eines hochdynamischen Motors durch minimierte Trägheitsmasse der Rotoren durch doppelten Luftspalt und dünnwandige Rotorausführung.

Nachfolgend werden anhand von Zeichnungen verschiedene Ausführungsformen des erfindungsgemäßen Doppelrotormotors dargestellt.

Es zeigen:
- Fig. 1:: Erfindungsgemäßer Motoraufbau mit optionalem äußeren und inneren Rückschlusselement;
- Fig. 1a:: Draufsicht auf Verstärkungselement;
- Fig. 2:: Teilquerschnittsdarstellung durch Stator, Außenrotor und Innenrotor mit aus Kunststoff gespritzter Trägerstruktur;
- Fig. 2a:: Trägerstruktur mit Verstärkungselement;
- Fig. 2b:: geschnittene Darstellung des Gehäuseteils sowie zweier Träger;
- Fig. 2c:: Motor mit außen und innen umspritzten Polschuhen.

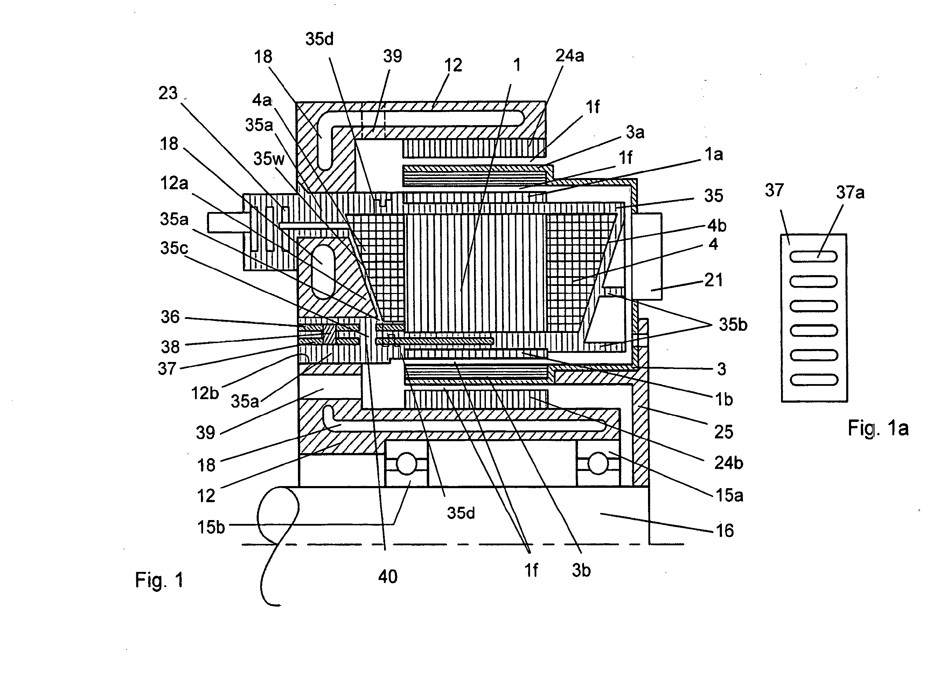

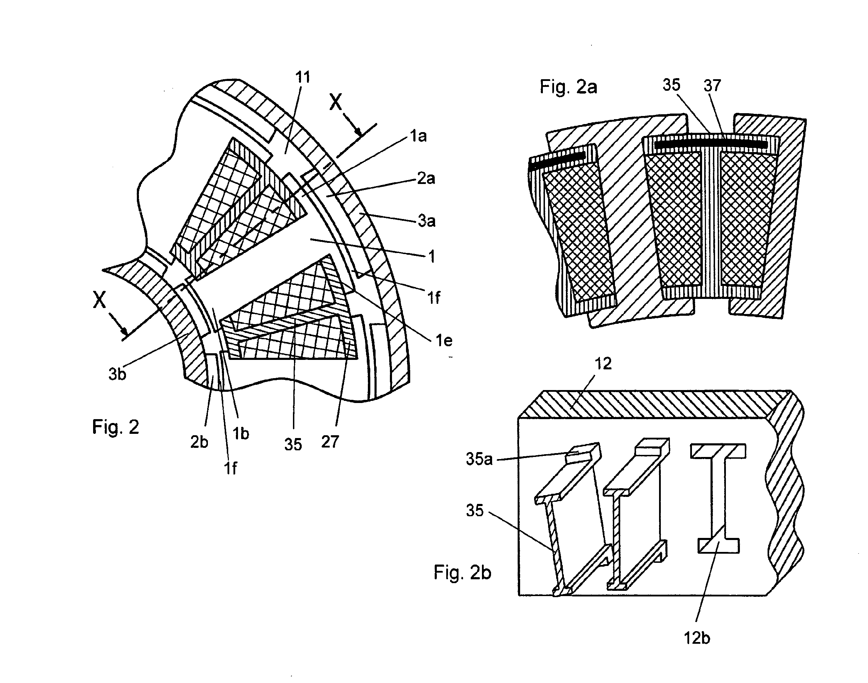

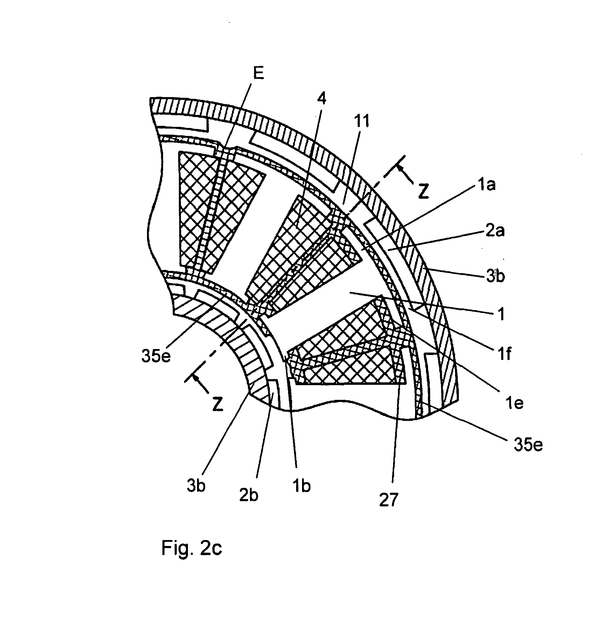

Die Figur 1 zeigt eine Querschnittsdarstellung durch eine erste mögliche Ausführungsform des erfindungsgemäßen Motors entsprechend dem Schnitt x-x in Fig. 2. Die Trägerstruktur 35, 35a, 35b, 35c ist aus einem hochwertigen biegesteifen und zugleich elektrisch isolierenden Werkstoff mit hohem E-Modul, vorzugsweise Duroplast mit Füllstoff. Die Querschnittskontur der einzelnen durch die eingespritzte Masse gebildeten Träger 35 ist in den nachfolgenden Figuren näher dargestellt. In der eingespritzten Masse des Trägermaterials liegt die Spule 4 mit Joch 1 ein und wird von dieser am Gehäuse 12 gehalten. Die Umspritzungsstruktur 35, welche die einzelnen Träger bildet, weist auf der Gehäuseseite jeweils eine Verdickung 35a in Form eines Sockels auf, welche bis zur axialen Seite 1a des Joches 1 reicht und im Gehäuse 12 in einer entsprechenden Ausnehmung 12b verankert ist. Vorzugsweise kann die Umspritzung in zwei Prozessschritten ausgeführt werden, sodass im Bereich 35a ein anderer Füllstoff mit besseren Wärmeleiteigenschaften, z.B. Bor-Nidrid, eingesetzt wird und im Bereich 35 ein Füllstoff mit hohem E-Modul, z.B. glasfaserverstärkter Kunststoff. Dadurch kann die Wärmeabfuhr zwischen Stator und Gehäuse weiter verbessert werden.

Der Stator besteht aus vereinzelten Statorzähnen 1 mit Polschuhen 1a im Außenbereich und Polschuhen 1b im Innenbereich, die mit Erregerspulen 4 bewickelt sind. Zudem weist der Motor einen mit Permanentmagneten 2a bestückten Außenrotor 3a und einen mit Permanentmagneten 2b bestückten Innenrotor 3b auf. Zudem sind zwei Rückschlusselemente 24a, 24b dargestellt, die optional vorgesehen werden können. Der magnetische Rückschluss kann auch über die Rotoren 3a, 3b erfolgen. Zwischen den Polschuhen 1a, 1b und den Rotoren 3a, 3b sowie den optionalen Rückschlusselementen 24a, 24b sind jeweils Luftspalte 1f.

Zudem kann ein Stanzgitter 23 vorgesehen werden, welches zur Kontaktierung mit umspritzt wird, sodass die Kontaktierung der Spulen 4 vor dem Umspritzen erfolgt und somit die Werkzeuggestaltung vereinfacht wird. In einem mehrteiligen Spritzverfahren ist vorzusehen, dass sich die Spritzgussmassen ineinander verzahnen. Ein entsprechender Verzahnungsbereich und Trennbereich der Gussmassen ist in 35d dargestellt.

Ferner ist das Gehäuse 12 im Bereich 12a so zu gestalten, dass der Abstand zwischen Spulenseite 4a und Gehäusebereich 12a minimiert wird. Der Gehäusebereich 12a verbreitert sich daher zur Rotationsachse hin, um der Spulenkontur angepasst zu sein. Hierdurch wird sichergestellt, dass die durch das Umspritzen erzeugte Wandung 35w für einen guten Wärmeübergang möglichst dünnwandig ist. Der Wandungsbereich 35w kann zudem mit einem Kunststoff mit guten Wärmeleiteigenschaften hergestellt werden.

Auf der Innenseite ist eine Verstärkungseinlage 36 mit hohem E-Modul und Wärmeleitung eingespritzt, welche beim Einspritzen durch entsprechende Werkzeuge formschlüssig auf die Statorzähne 1 gedrückt wird. Weiterhin ist optional ein weiteres äußeres Einlegeteil 37 vorgesehen, welches durch eine oder mehrere Aussparungen 40 auch im inneren Einlegeteil mit der Verspritzung im Bereich 35c verbunden ist. Ferner kann ein Verbindungssteg bzw. Verbindungsring 38 zwischen den Einlegeteilen 36 und 37 zur weiteren Versteifung vorgesehen werden.

Das Einlegeteil 36, 37 kann auch aus dem Gehäuse 12 seitlich herausragen und federnd am Gehäuse 12 zur Aufrechthaltung einer Vorspannung anliegen. Dies verbessert den Verbund, insbesondere, wenn als Einlegeteile 36, 37 ein metallischer Werkstoff verwendet wird. Um Wirbelstrom zu reduzieren, ist das Einlegeteil 36, 37 dünn und mit Langloch-Ausstanzungen 37a versehen, wie es in Figur 1a dargestellt ist.

Auf der dem Gehäuse abgewandten Stirnseite 4b ist die Spule 4 ebenfalls umspritzt, wobei die Spritzmasse Verstärkungsrippen 35b bildet. Diese erhöhen die Steifigkeit und vergrößern die Oberfläche zur Wärmeabfuhr durch Luftkühlung. Unterstützt wird die Luftkühlung durch ein Lüfterrad 21. Zur entsprechenden Luftführung können Aussparungen 39 im Rotor und Gehäuse 12 vorgesehen werden.

Die magnetischen Rückschlüsse 24a und 24b sind gehäusefest gelagert. Zwischen Stator, Rotoren 3a bzw. 3b und Rückschlüssen 24a bzw. 24b sind jeweils zwei Luftspalte 1f. Die Rotoren 3a und 3b sind dünnwandig ausgebildet. Dadurch dann die Trägheitsmasse des Rotors reduziert und die Kühlkanäle 18 können sich axial im Gehäuse erstrecken, wodurch die Rotorkühlung verbessert wird.

Die als Doppel-T-Träger ausgebildeten Trägerstrukturen 35 reichen bis zum Jochinnern zur Vergrößerung des Flächenträgheitsmoments Ia und somit zur Verbesserung der tangentialen Beanspruchung. Für radiale Beanspruchung ist die radiale Steghöhe der Träger 35 möglichst sehr groß auszubilden, was zu einer hohen Steifigkeit führt.

Für die Struktur ist es notwendig, das der Statorzahn zuvor bewickelt und in Position zum Gehäuse positioniert wird.

Die Figur 2a zeigt den Doppel-T-Träger 35 mit einem radial äußeren Verstärkungselement 37. Das Verstärkungselement 37 kann alternativ relativ zu den Erregerspulen 4 jedoch auch radial innen angeordnet werden. Selbstverständlich können auch außen und innen Verstärkungselemente 37 angeordnet und eingespritzt werden. Vorzugsweise ist das Verstärkungselement 37 aus einem schlecht leitfähigem metallischen Material, z.B. Edelstahl, mit Ausstanzungen 37a zur Reduzierung der Stromleitfähigkeit und somit der Wirbelstromverluste.

Die Figur 2b zeigt die abgeschnittenen T-Träger 35 mit Verdickung 35a sowie die Kontur der Gehäuseausnehmung 12b, welche spritztechnisch ausgelegt ist, damit eine sichere Verankerung zustande kommt. Die Gehäuseausnehmung 12b sollte von ihrer Kontur her der Querschnittskontur der Träger 35 entsprechen, so dass sich eine hohe Steifigkeit ergibt und sich die Träger bis hinein oder durch die Gehäusewandung erstrecken. Hierbei sollte auch auf einen minimalen Materialeinsatz unter Berücksichtigung der notwendigen Steifigkeit geachtet werden.

Die Figur 2c zeigt eine Erweiterung der T-Trägerstruktur 35. Die Träger 35 sind mit einem Außenring 35e als Teil des Spritzgusses über die Bereiche 35s verbunden, welcher die Außenpole 1a einschließlich dem Außenstärkungsring 35e umfasst. Dieser Ring 35e ist auch bei kleiner Wandstärke sehr wirksam für die Versteifung bei tangentialer Beanspruchung. Im Bereich Z-Z ist eine weitere Alternative dargestellt, bei der sowohl der äußere als auch der innere Jochpol 1a, 1b dünnwandig durch Ringe 35e umspritzt sind und mit Stegen zwischen den Spulen verbunden sind. Zur Herstellung einer dünnen Wandstärke eignet sich vorzugsweise Duroplast. Hierzu kann zur Einspritzung der Bereich E zwischen den Polen gegebenenfalls wegen der Gratbildung etwas vertieft ausgestaltet werden.

Durch o.g. Maßnahmen kann der Spulenraum zwischen den Polen voll genutzt werden, was den Wirkungsgrad steigert. Mit diesen Maßnahmen lässt sich eine große Steifheit mit guter Wärmeabfuhr erzielen, so dass es möglich ist, einen Motor mit großer Leistung mit kleinem Durchmesser und relativ langen freitragenden Spulen zu realisieren.

### Bezugszeichenliste:

- 1: Polschuhformteil als Statorzahn
- 1a: äußerer Polschuh des Polschuhformteils bzw. Statorzahns
- 1b: innerer Polschuh des Polschuhformteils bzw. Statorzahns
- 1f: Luftspalt
- 2a: Permanentmagnete des Außenrotors
- 2b: Permanentmagnete des Innenrotors
- 3: Rotor
- 3a: Außenrotor
- 3b: Innenrotor
- 4: Erregerspule
- 11: Kühlkanal
- 12: Gehäuse
- 12a: Gehäuseabsatz
- 15a, 15b: Wellenlagerung
- 16: Abtriebswelle
- 18: Wasserkanal
- 21: Lüfterrad
- 22: Gehäuseaussparung für elektrischen Anschluss/Spulenabgänge
- 23: Stanzgitter
- 24a, 24b: ferromagnetisches Gehäuseeinlegeteil (Rückschluss für Magnetkreis)
- 25: Mitnehmer
- 27: Verstärkungssteg des Doppel-T-förmigen Profilträgers 35
- 35: Träger der Trägerstruktur aus Spritzgusstechnik
- 35a: gehäuseseitige Verdickung der Spritzgussstruktur
- 35b: stirnseitige Verrippung der Spritzgussstruktur
- 35s: sich radial und axial erstreckende Verbindungsstege
- 35w: dünnwandiger Bereich des eingespritzten Kunststoffes
- 36, 37: Verstärkungselemente
- 37a: Ausnehmungen, insbesondere Ausstanzungen
- 38: Verbindungssteg/ Verbindungsring
- E: Einspritzbereich
- Ia: Flächenträgheitsmoment

## Patentansprüche

1. Elektromotor mit einem Außenrotor (3a) und einem Innenrotor (3b), wobei der die Erregerspulen (4) tragende Stator hohlzylindrisch ausgebildet ist und zwischen dem topfförmig ausgebildeten Außenrotor (3a) und dem Innenrotor (3b) angeordnet ist und stirnseitig mit dem Gehäuse oder einem mit dem Gehäuse fest verbundenen Teil (12) des Elektromotors verbunden ist, wobei der Stator mehrere Statorzähne (1) aufweist, die an sich in axialer Richtung erstreckenden Trägern (35) anliegen, **dadurch gekennzeichnet, dass** die Träger (35) durch eine Spritzgußmasse aus Kunststoff, insbesondere Duroplast, gebildet sind, die den Raum zwischen den jeweils benachbarten Erregerspulen (4) und den Statorzähnen (1) ausfüllt, wobei die Träger (35) sich in oder durch das metallische Gehäuse oder ein mit dem Gehäuse fest verbundenes metallisches Teil (12) hinein und/oder hindurch erstrecken und an diesem anliegen, und dass das Gehäuse oder das Teil (12) eine Wandung mit Ausnehmungen (12b), insbesondere fensterartige Durchgriffsöffnungen, zur Verankerung der Träger (35) aufweist.

2. Elektromotor nach Anspruch 1, **dadurch gekennzeichnet, dass** die Träger (35) eine Querschnittsform aufweisen, die T-förmig oder Doppel-T-förmig ist.

3. Elektromotor nach Anspruch 1 oder 2, **dadurch gekennzeichnet, dass** die Statorzähne (1) radial nach innen weisende Polschuhe (1b) und radial nach außen weisende Polschuhe (1a) aufweisen, wobei die Trägermasse (27) zwischen den radialen Seitenbereichen (4a, 4b) der Erregerspulen (4) und den Innenseiten (1e) der Polschuhe (1a, 1b) einliegt und tangentiale Wandungen bildet.

4. Elektromotor nach einem der Ansprüche 1 bis 3, **dadurch gekennzeichnet, dass** die Querschnittsfläche der Träger (35) im Bereich (35a) zwischen Gehäuse bzw. Teil (12) und Statorzahn (1) und/oder Erregerspule (4) größer ist als die Querschnittsfläche der Träger (35) im Bereich zwischen den benachbarten Erregerspulen und/oder Statorzähnen.

5. Elektromotor nach Anspruch 1, **dadurch gekennzeichnet, dass** die Kontur der Ausnehmungen der Querschnittskontur der Träger entspricht.

6. Elektromotor nach Anspruch 5, **dadurch gekennzeichnet, dass** die Querschnittsfläche der Ausnehmungen (12b) jeweils größer ist als die Querschnittsfläche der Träger (35) im Bereich zwischen den benachbarten Statorzähnen und/oder Erregerspulen.

7. Elektromotor nach einem der Ansprüche 1 bis 6, **dadurch gekennzeichnet, dass** das Gehäuse oder das Teil (12) aus Aluminium ist und als Druckgussteil hergestellt ist.

8. Elektromotor nach einem der Ansprüche 1 bis 7, **dadurch gekennzeichnet, dass** die Träger (35) radial nach außen und/oder innen mit einer Spritzgußmasse (35e) in Verbindung sind, die die äußeren Polschuhe (1a) und/oder die die inneren Polschuhe (1b) ummantelt.

9. Elektromotor nach einem der Ansprüche 1 bis 8, **dadurch gekennzeichnet, dass** in die Kunststoffmasse, welche unter anderem die Träger (35) bildet, Verstärkungselemente (36, 37), insbesondere plattenförmige oder gebogene plattenförmige Elemente, eingebettet sind, die sich in axialer Richtung erstrecken.

10. Elektromotor nach Anspruch 9, **dadurch gekennzeichnet, dass** das erste Verstärkungselement (36) mit dem Statorzahn formschlüssig verbunden ist.

11. Elektromotor nach Anspruch 9 oder 10, **dadurch gekennzeichnet, dass** das zweite Verstärkungselement (37) sich über einen Teil der axialen Länge der Träger (35) in diesen oder unter- oder oberhalb der Träger (35) erstreckt.

12. Elektromotor nach einem der Ansprüche 9 bis 11, **dadurch gekennzeichnet, dass** die Verstärkungselemente (37) jeweils mindestens eine fensterartige Durchgriffsöffnung (37a), insbesondere Langlochausstanzungen, aufweisen.

13. Elektromotor nach einem der Ansprüche 9 bis 12, **dadurch gekennzeichnet, dass** die Verstärkungselemente (36, 37) aus elektrisch nicht oder nur geringfügig leitfähigem Material sind.

14. Elektromotor nach einem der Ansprüche 9 bis 13, **dadurch gekennzeichnet, dass** die Verstärkungselemente über ihre Durchgriffsöffnungen (37a) mit dem Kunststoff verkrallen und/oder über einen Verbindungssteg/Verbindungsring (38) mit einander verbunden sind.

15. Elektromotor nach einem der Ansprüche 1 bis 14, **dadurch gekennzeichnet, dass** die Wandung (12a) des Gehäuses oder Teils (12), welche an die axiale Seite (4a) der Erregerspulen (4) angrenzt, der Kontur der Seite (4a) angepasst ist, derart, dass nur eine dünne Wandung (35w) aus Kunststoff die Erregerspulen (4) und das Gehäuse bzw. Teil (12) trennt.

16. Elektromotor nach einem der Ansprüche 1 bis 15, **dadurch gekennzeichnet, dass** das axiale freie Statorende, welches dem Gehäuse bzw. Teil (12) abgewandt ist, Verstärkungsrippen (35b) aufweist, die insbesondere aus dem die Träger (35) bildenden Kunststoff gebildet sind.

17. Elektromotor nach einem der Ansprüche 1 bis 16, **dadurch gekennzeichnet, dass** das axiale freie Statorende, welches dem Gehäuse bzw. Teil (12) abgewandt ist, mindestens einen Verstärkungsring, insbesondere aus Kunststoff oder Metall, aufweist, der insbesondere in das Trägermaterial zumindest teilweise eingebettet und mit den Statorzähnen verbunden ist.

18. Elektromotor nach einem der vorhergehenden Ansprüche, **dadurch gekennzeichnet, dass** ein erstes äußeres Rückschlussteil (24a) den Außenrotor (1a) umfasst, und dass ein zweites inneres Rückschlussteil (24b) vom Innenrotor (1a) umfasst ist, wobei zwischen dem äußeren Rückschlussteil (24a) und dem Außenrotor (1a) sowie zwischen dem inneren Rückschlussteil (24b) und dem Innenrotor (1b) jeweils ein Luftspalt (1f) ist.

19. Elektromotor nach Anspruch 18, **dadurch gekennzeichnet, dass** die Rückschlussteile (24a, 24b) am Gehäuse oder dem Teil (12) angeordnet sind.

20. Elektromotor nach einem der vorhergehenden Ansprüche, **dadurch gekennzeichnet, dass** die die Träger (35) und Ummantelungen (35a, 35b, 35c, 35e) bildende Kunststoffmasse bereichsweise aus unterschiedlichen Materialien ist, wobei in Bereichen (35a), in denen eine gute Wärmeleitfähigkeit notwendig ist, ein Material mit guten Wärmeleiteigenschaften eingespritzt ist, und dass in Bereichen (35), in denen eine hohe Steifigkeit notwendig ist, ein hochfestes Material eingespritzt ist und dass sich die Spritzmassen in Bereichen (35) durch Hinterschnitte ineinander verkrallen, so dass sich die Trägervergussmasse axial, radial und tangential an der Vergussmasse mit höheren Wärmeleitwert abstützt.

21. Elektromotor nach einem der vorhergehenden Ansprüche, **dadurch gekennzeichnet, dass** Kühlkanäle sich insbesondere in axialer Richtung durch das Gehäuse (12) erstrecken.

22. Elektromotor nach einem der vorhergehenden Ansprüche, **dadurch gekennzeichnet, dass** die Erregerspulen (4) körperlos sind, d.h. keinen Wickelkörper aufweisen.

23. Elektromotor nach einem der vorhergehenden Ansprüche, **dadurch gekennzeichnet, dass** in dem Kunststoff für hohe Wärmeleiteigenschaft ein Füllstoff mit hoher Wärmleitfähigkeit (z.B. Bor-Nitrid) enthalten ist.

24. Verfahren zur Herstellung eines Elektromotors nach einem der vorhergehenden Ansprüche, **dadurch gekennzeichnet, dass** das Gehäuse oder der Statorflansch (12) des Motors in eine Spritzgießeinrichtung eingelegt wird und die Polschuhteile (1) mit den Erregerspulen (4) zum Gehäuse oder dem Statorflansch (12) positioniert werden, und optional mit einem Stanzgitter (23) kontaktiert werden, wonach dann eine Kunststoffspritzmasse (35) in die Spritzgießeinrichtung eingedrückt wird, die in die Ausnehmungen und/oder Hinterschneidungen (12b) des Gehäuses bzw. des Statorflansches (12) sowie in die Zwischenräume zwischen den Polschuhteilen (1) und den Erregerspulen (4) eindringt und hierdurch die Träger (35) entstehen, welche mit dem Gehäuse bzw. dem Statorflansch (12) verbunden sind.

25. Verfahren nach Anspruch 24, **dadurch gekennzeichnet, dass** in die Spritzgießmasse Verstärkungsteile (36, 37), insbesondere dünnwandige Verstärkungsteile, eingegossen werden.

## Claims

1. Electric motor having an outer rotor (3a) and an inner rotor (3b), wherein the stator bearing the field coils (4) is formed as a hollow cylinder and is arranged between the cup-shaped outer rotor (3a) and the inner rotor (3b) and is connected on the front side to the housing or a part (12) of the electric motor that is connected firmly to the housing, wherein the stator has several stator teeth (1), which abut on carriers (35) that extend in the axial direction, **characterised in that** the carriers (35) are formed by an injection moulding mass made from plastic, in particular duroplast, which fills the space between the respective adjacent field coils (4) and the stator teeth (1), wherein the carriers (35) extend into and/or through the metallic housing or a metallic part (12) connected firmly to the housing and abut on this, and that the housing or the part (12) has a wall having recesses (12b), in particular window-like through openings, for anchoring the carriers (35).

2. Electric motor according to claim 1, **characterised in that** the carriers (35) have a cross-sectional shape which is T-shaped or double T-shaped.

3. Electric motor according to claim 1 or 2, **characterised in that** the stator teeth (1) have pole shoes (1b) that point radially inwards and pole shoes (1a) that point radially outwards, wherein the carrier mass (27) lies between the radial side regions (4a, 4b) of the field coils (4) and the inner sides (1e) of the pole shoes (1a, 1b) and forms tangential walls.

4. Electric motor according to any one of claims 1 to 3, **characterised in that** the cross-sectional area of the carriers (35) is larger in the region (35a) between housing or part (12) and stator tooth (1) and/or field coil (4) than the cross-sectional area of the carriers (35) in the region between the adjacent field coils and/or stator teeth.

5. Electric motor according to claim 1, **characterised in that** the contour of the recesses corresponds to the cross-sectional contour of the carriers.

6. Electric motor according to claim 5, **characterised in that** the cross-sectional area of the recesses (12b) is larger respectively than the cross-sectional area of the carriers (35) in the region between the adjacent stator teeth and/or field coils.

7. Electric motor according one of claims 1 to 6, **characterised in that** the housing or the part (12) is made from aluminium and is produced as a die casting part.

8. Electric motor according to one of claims 1 to 7, **characterised in that** the carriers (35) are connected radially outwardly and/or inwardly to an injection moulding mass (35e), which encases the outer pole shoes (1) and/or the inner pole shoes (1b).

9. Electric motor according to one of claims 1 to 8, **characterised in that** reinforcement elements (36, 37), in particular planar or bent planar elements, are embedded in the plastic mass, which forms, among other things, the carriers (35), said reinforcement elements (36, 37) extending in the axial direction.

10. Electric motor according to claim 9, **characterised in that** the first reinforcement element (36) is connected positively to the stator tooth.

11. Electric motor according to claim 9 or 10, **characterised in that** the second reinforcement element (37) extends over a part of the axial length of the carriers (35) into these or above or below the carriers (35).

12. Electric motor according to one of claims 9 to 11, **characterised in that** the reinforcement elements (37) have at least one window-like through opening (37a), in particular elongated hole perforations, respectively.

13. Electric motor according to one of claims 9 to 12, **characterised in that** the reinforcement elements (36, 37) are made from non-electrically or only slightly conductive material.

14. Electric motor according to one of claims 9 to 13, **characterised in that** the reinforcement elements interlock with the plastic via their through openings (37a) and/or are connected to one another via a connection web/connection ring (38).

15. Electric motor according to one of claims 1 to 14, **characterised in that** the wall (12a) of the housing or part (12), which borders the axial side (4a) of the field coils (4), is adapted to the contour of the side (4a) in such a way that only a thin wall (35w) made from plastic separates the field coils (4) and the housing or part (12).

16. Electric motor according to one of claims 1 to 15, **characterised in that** the axial free stator end, which faces away from the housing or part (12), has reinforcement ribs (35b), which are formed, in particular, from the plastic forming the carriers (35).

17. Electric motor according to one of claims 1 to 16, **characterised in that** the axial free stator end, which faces away from the housing or part (12), has at least one reinforcement ring, in particular made from plastic or metal, which is embedded at least partially, in particular, in the carrier material and is connected to the stator teeth.

18. Electric motor according to one of the preceding claims, **characterised in that** a first outer return part (24a) embraces the outer rotor (1a), and that a second inner return part (24b) embraces the inner rotor (1a), wherein an air gap (1f) is between the outer return part (24a) and the outer rotor (1a) as well as between the inner return part (24b) and the inner rotor (1b) respectively.

19. Electric motor according to claim 18, **characterised in that** the return parts (24a, 24b) are arranged on the housing or the part (12).

20. Electric motor according to one of the preceding claims, **characterised in that** the plastic mass forming the carriers (35) and casings (35a, 35b, 35c, 35e) is made from different materials in regions, wherein a material with good thermally conductive properties is injected in regions (35a) in which a good thermal conductivity is necessary, and that a high-strength material is injected in regions (35) in which a high stiffness is necessary, and that the injection masses interlock in one another in regions (35) using undercuts, such that the carrier casting mass is supported with a higher thermal conductance axially, radially and tangentially on the casting mass.

21. Electric motor according to one of the preceding claims, **characterised in that** the cooling channels extend through the housing (12), in particular in the axial direction.

22. Electric motor according to one of the preceding claims, **characterised in that** the field coils (4) are bodiless, i.e. they have no spool body.

23. Electric motor according to one of the preceding claims, **characterised in that** a filling material with a high thermal conductivity (e.g. boron nitride) is contained in the plastic for high thermally conductive properties.

24. Method for the production of an electric motor according to one of the preceding claims, **characterised in that** the housing or the stator flange (12) of the motor is inserted into an injection moulding device and the pole shoe parts (1) having the field coils (4) are positioned toward the housing or the stator flange (12), and are optionally connected to a stamped grid (23), whereafter then a plastic injection mass (35) is pushed into the injection moulding device, which enters into the recesses and/or the undercuts (12b) of the housing or the stator flange (12) as well as into the spaces between the pole shoe parts (1) and the field coils (4), and hereby the carriers (35) result, which are connected to the housing or to the stator flange (12).

25. Method according to claim 24, **characterised in that** reinforcement parts (36, 37) are moulded into the injection moulding mass, in particular thin-walled reinforcement parts.

## Revendications

1. Moteur électrique comportant un rotor extérieur (3a) et un rotor intérieur (3b), étant précisé que le stator portant les bobines d'excitation (4) a la forme d'un cylindre creux et est disposé entre le rotor extérieur (3a) conçu en forme de pot et le rotor intérieur (3b), ledit stator est en outre relié côté frontal à un boîtier ou à une pièce (12) du moteur électrique reliée fixement au boîtier, étant précisé que le stator comporte plusieurs dents (1) s'appuyant contre des supports (35) qui s'étendent en direction axiale, **caractérisé en ce que** les supports (35) sont constitués d'une matière plastique coulée par injection, notamment de plastique thermodurcissable, remplissant l'espace entre les bobines d'excitation (4) et les dents de stator (1) respectivement adjacentes ,étant précisé que les supports (35) s'étendent dans le boîtier métallique ou à travers celui-ci, ou dans une pièce métallique (12) reliée fixement au boîtier ou à travers celle-ci, et s'appuient contre ladite pièce métallique, et que le boîtier ou la pièce (12) comporte une paroi avec des entailles (12b), notamment des ouvertures de pénétration en forme de fenêtre pour la fixation des supports (35).

2. Moteur électrique conforme à la revendication 1, **caractérisé en ce que** les supports (35) présentent, en coupe transversale, une forme en T ou en double T.

3. Moteur électrique conforme à la revendication 1 ou 2, **caractérisé en ce que** les dents de stator (1) présentent des masses polaires (1b) orientées dans le sens radial vers l'intérieur et des masses polaires (1a) orientées dans le sens radial vers l'extérieur, étant précisé que la matière des supports (27) est logée entre les zones latérales radiales (4a, 4b) des bobines d'excitation (4) et les cotés intérieurs (1e) des masses polaires (1a, 1b) et forme des parois tangentielles.

4. Moteur électrique conforme à l'une des revendications 1 à 3, **caractérisé en ce que** la surface de la section transversale des supports (35) dans la zone (35a) situé entre le boîtier ou la pièce (12) et la dent de stator (1) et/ou les bobines d'excitation (4) est supérieure à la surface de la section transversale des supports (35) dans la zone située entre les bobines d'excitation et/ou les dents de stator adjacentes.

5. Moteur électrique conforme à la revendication 1, **caractérisé en ce que** le contour des entailles correspond au contour de la section transversale des supports.

6. Moteur électrique conforme à la revendication 5, **caractérisé en ce que** la surface de la section transversale des entailles (12b) est respectivement supérieure à la surface de la section transversale des supports (35) dans la zone située entre les bobines d'excitation et/ou les dents de stator adjacentes.

7. Moteur électrique conforme à l'une des revendications 1 à 6, **caractérisé en ce que** le boîtier ou la pièce (12) est constitué en aluminium et est une pièce moulée sous pression.

8. Moteur électrique conforme à l'une des revendications 1 à 7, **caractérisé en ce que** les supports (35) sont reliés radialement vers l'extérieur et/ou vers l'intérieur à une matière coulée par injection (35e) qui enrobe les masses polaires extérieures (1a) et/ou les masse polaires intérieures (1b).

9. Moteur électrique conforme à l'une des revendications 1 à 8, **caractérisé en ce que** des éléments de renforcement (36, 37), notamment des éléments en forme de plaque ou recourbés en forme de plaque qui s'étendent en direction axiale, sont encastrés dans la coulée de plastique qui forme entre autres les supports (35).

10. Moteur électrique conforme à la revendication 9, **caractérisé en ce que** le premier élément de renforcement (36) est relié solidairement à la dent de stator.

11. Moteur électrique conforme à l'une des revendications 9 ou 10, **caractérisé en ce que** le deuxième élément de renforcement (37) s'étend sur une partie de la longueur axiale des supports (35) dans ceux-ci ou au-dessous ou au-dessus des supports (35).

12. Moteur électrique conforme à l'une des revendications 9 à 11, **caractérisé en ce que** les éléments de renforcement (37) présentent chacun au moins une ouverture de pénétration (37a) en forme de fenêtre, notamment des fentes oblongues.

13. Moteur électrique conforme à l'une des revendications 9 à 12, **caractérisé en ce que** les éléments de renforcement (36, 37) sont fabriqués dans un matériau dont la conductivité électrique est nulle ou insignifiante.

14. Moteur électrique conforme à l'une des revendications 9 à 13, **caractérisé en ce que** les éléments de renforcement sont accrochés à la matière plastique via leurs ouvertures de pénétration (37a) et/ou sont reliés entre eux par le biais d'une entretoise/d'un anneau de liaison (38).

15. Moteur électrique conforme à l'une des revendications 1 à 14, **caractérisé en ce que** la paroi (12a) du boîtier ou de la pièce (12) contigüe au côté axial (4a) des bobines d'excitation (4) est ajustée au contour du côté (4a) de telle sorte que seule une fine paroi (35w) de plastique sépare les bobines d'excitation (4) du boîtier ou de la pièce (12).

16. Moteur électrique conforme à l'une des revendications 1 à 15, **caractérisé en ce que** l'extrémité axiale libre du stator située du côté opposé au boîtier ou à la pièce (12) comporte des nervures de renfort (35b) qui sont notamment constituées de la matière plastique formant les supports (35).

17. Moteur électrique conforme à l'une des revendications 1 à 16, **caractérisé en ce que** l'extrémité axiale libre du stator située du côté opposé au boîtier ou à la pièce (12) comporte au moins un anneau de renforcement, en particulier en matière plastique ou en métal, qui est notamment au moins partiellement encastré dans le matériau des supports et relié aux dents de stator.

18. Moteur électrique conforme à l'une des revendications précédentes, **caractérisé en ce qu**'une première pièce de retenue externe (24a) comprend le rotor extérieur (1a) et qu'une deuxième pièce de retenue interne (24b) est englobée par le rotor interne (1a), étant précisé qu'il existe un entrefer (1f) entre d'une part la pièce de retenue externe (24a) et le rotor extérieur (1a) et d'autre part entre la pièce de retenue interne (24b) et le rotor intérieur (1b).

19. Moteur électrique conforme à la revendication 18, **caractérisé en ce que** les pièces de retenue (24a, 24b) sont disposées sur le boîtier ou la pièce (12).

20. Moteur électrique conforme à l'une des revendications précédentes, **caractérisé en ce que** la coulée de matière plastique formant les supports (35) et les enrobages (35a, 35b, 35c, 35e) est constituée, par zones, de matériaux différents, étant précisé que dans les zones (35a) dans lesquelles une bonne conductivité thermique est nécessaire, un matériau possédant des propriétés de bonne conductivité thermique est injecté, et dans les zones (35) dans lesquelles une forte rigidité est nécessaire, un matériau très résistant est injecté, et les matériaux injectés dans les zones sont ancrés les uns dans les autres par des contre-dépouilles, de telle sorte que la matière des supports repose, dans le sens axial, radial et tangentiel, sur la masse de coulage possédant la plus haute valeur de conductivité thermique.

21. Moteur électrique conforme à l'une des revendications précédentes, **caractérisé en ce que** des canaux de refroidissement s'étendent notamment en direction axiale à travers le boîtier (12).

22. Moteur électrique conforme à l'une des revendications précédentes, **caractérisé en ce que** les bobines d'excitation (4) ne comportent pas d'enroulement.

23. Moteur électrique conforme à l'une des revendications précédentes, **caractérisé en ce que** pour obtenir une propriété de haute conductivité thermique, la matière plastique contient un agent de remplissage dont la conductivité thermique est plus élevée (par ex. le nitrure de bore).

24. Procédé de fabrication d'un moteur électrique conforme à l'une des revendications précédentes, **caractérisé en ce que** le boîtier ou la bride de stator (12) du moteur est inséré(e) dans un dispositif d'injection et les parties de masses polaires (1) avec les bobines d'excitation (4) sont positionnées sur le boîtier ou la bride de stator (12), et facultativement, sont en contact avec une grille estampée (23), après quoi, ensuite, une matière plastique coulée par injection(35) est pressée dans le dispositif d'injection et pénètre dans les entailles et/ou les contre-dépouilles (12b) du boitier ou de la bride de stator (12) ainsi que dans les espaces situés entre les parties de masses polaires (1) et les bobines d'excitation (4), ce qui aboutit à la formation des supports (35) qui sont reliés au boîtier ou à la bride de stator (12).

25. Procédé conforme à la revendication 24, **caractérisé en en ce que** des pièces de renforcement (36, 37), notamment des pièces de renforcement à paroi mince, sont coulées dans la matière de moulage par injection.
